**Europäisches Patentamt**

**European Patent Office**

**Office européen des brevets**

(11) Veröffentlichungsnummer: **0 243 666**
A1

# (12) EUROPÄISCHE PATENTANMELDUNG

(21) Anmeldenummer: **87104200.8**

(22) Anmeldetag: **21.03.87**

(51) Int. Cl.³: **B 62 L 1/16**
**B 62 J 7/00**

(30) Priorität: **30.04.86 DE 3614677**

(43) Veröffentlichungstag der Anmeldung:
**04.11.87 Patentblatt 87/45**

(84) Benannte Vertragsstaaten:
**CH DE FR GB IT LI NL**

(71) Anmelder: **UNION Sils, van de Loo & Co. GmbH**
**Ardeyer Strasse 13/15**
**D-5758 Fröndenberg(DE)**

(72) Erfinder: **Hartmann, Jan Dirk, Dipl.-Wirtschafts-Ing.**
**Schwitterweg 37b**
**D-5750 Menden 1(DE)**

(74) Vertreter: **Patentanwaltsbüro Cohausz & Florack**
**Postfach 14 01 47**
**D-4000 Düsseldorf 1(DE)**

(54) **Felgenbremse für ein Fahrrad.**

(57) Die Erfindung betrifft eine Felgenbremse mit einem Lagerteil an dem ein Paar zweiarmiger Hebel angelenkt ist, deren untere Enden Bremsklötze tragen und deren obere Enden mit Kraftübertragungsmitteln verbunden sind, die zu einem Handhebel führen. Das Lagerteil (1) weist zwei jeweils zu einer Seite des Rades angeordnete Profile (1a, 1b) auf. An jedem der Profile (1a, 1b) ist einer der zweiarmigen Hebel (2, 3) angelenkt und die Anlenkstellen (6, 7) sind auf den Profilen schiebverstellbar.

EP 0 243 666 A1

./...

Fig. 1

0243666

# COHAUSZ & FLORACK

**PATENTANWALTSBÜRO**

**SCHUMANNSTR. 97 D-4000 DÜSSELDORF 1**

Telefon: (0211) 683346 · Telefax: (0211) 6790871 · Telex: 8586513 cop d

---

**PATENTANWÄLTE:**

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

---

20.03.1987
HC/Sr 46074EP

- 1 -

UNION Sils,
van de Loo & Co. GmbH
Ardeyer Straße 13/15
5758 Fröndenberg

Felgenbremse für ein Fahrrad

Die Erfindung betrifft eine Felgenbremse mit einem Lagerteil an dem ein Paar zweiarmiger Hebel angelenkt ist, deren untere Enden Bremsklötze tragen und deren obere Enden mit Kraftübertragungsmitteln verbunden sind, die zu einem Handhebel führen.

Es sind Felgenbremsen bekannt, bei denen die Bremsklötze durch Langlöcher an den Bremshebeln höhenverstellbar sind um den unterschiedlichen Felgen angepaßt zu werden. Dieses Verstellen ist arbeitsaufwendig und führt zu unterschiedlichen Hebelverhältnissen der beiden Bremshebel. Darüber hinaus sind diese bekannten Felgenbremsen wenig stabil, so daß bei einer starken Bremsung die Vorderradbremse vom Gabelkopf abgebogen wird und in der verbogenen Stellung verbleibt.

Aufgabe der Erfindung ist es, eine Felgenbremse der eingangs genannten Art zu schaffen, die leicht einstellbar ist und hohe, durch das Bremsen erzeugte Kräfte aufnimmt ohne sich zu verformen. Darüber hinaus ist es Aufgabe der Erfindung, eine Felgenbremse zu schaffen, die den Anbau eines Dynamo, eines Scheinwerfers und/oder eines Gepäckträgers zuläßt.

Diese Aufgabe wird erfindungsgemäß dadurch gelöst, daß das Lagerteil zwei jeweils zu einer Seite des Rades angeordnete Profile aufweist, daß an jedem der Profile einer der zweiarmigen Hebel angelenkt ist und daß die Anlenkstellen auf den Profilen schiebverstellbar sind.

Die beiden an den seitlichen Lagerteilen schiebverstellbaren Anlenkstellen für die Bremshebel lassen ein sehr genaues Ausrichten der Bremhebel und damit auch der Bremsklötze gegenüber den Felgen zu, so daß ein Verstellen der Bremsklötze gegenüber den Bremshebeln nicht mehr erforderlich ist und die Bremse leicht an unterschiedliche Reifen bzw. Räder angepaßt werden kann. Darüber hinaus nimmt das die Anlenkstellen verbindende Querteil die beim Bremsen erzeugten nach außen wirkenden Kräfte auf, so daß die Felgenbremse eine hohe Stabilität und Formbeständigkeit besitzt. Da die Bremse aus konstruktiv einfachen Teilen aufgebaut ist, ist sie preiswert in der Herstellung und einfach in der Montage. Besonders vorteilhaft ist es, daß durch ein Verstellen der Achsen auf den Profilen die Hebelverhältnisse der Bremshebel gleich bleiben.

Besonders vorteilhaft ist es, wenn die Profile radial zum jeweiligen Rad verlaufen, da dann die Bremsklötze in jeder Stellung zur Felge ausgerichtet bleiben. Hierbei können auch die Profile etwa parallel zu den seitlichen, das Rad haltenden Profilen der Fahrradgabel oder des Fahrradrahmens verlaufen.

Eine besonders sichere Aufnahme der beim Bremsen erzeugten Querkräfte ist dann gewährleistet, wenn die Anlenkstellen der zweiarmigen Hebel durch ein starres waagerechtes Querteil miteinander verbunden sind. Hierzu wird auch vorgeschlagen, daß das Lagerteil die Form eines umgedrehten U aufweist und mit den unteren Schenkelenden jeweils an den Gabelrohren oder Rahmenrohren befestigt ist. Ein Befestigen des Lagerteils im unteren Bereich an den Gabelrohren oder am Fahrradrahmen führt zu einer besonders hohen Stabilität der Bremse.

Eine besonders einfache Herstellung ist dann gewährleistet, wenn das Lagerteil aus einem Profil, insbesondere einem Draht U-förmig gebogen ist. Hierzu wird auch vorgeschlagen, daß das Profil bzw. der Draht beider Schenkel des Lagerteils im oberen Bereich entgegen der Fahrtrichtung nach hinten und darauf nach unten umgebogen und durch ein waagerechtes Profilstück verbunden ist um mit dem Profilstück an einem Verbindungsstück befestigt zu sein, das vom Kopf der Fahrradgabel oder des Fahrradrahmens gehalten ist.

Besonders vorteilhaft ist es, wenn am Querteil ein Walzendynamo um das Querteil verschwenkbar befestigt ist. Auch kann an dem Lagerteil ein Scheinwerfer befestigt sein. Vorzugweise wird vorgeschlagen, daß an dem Lagerteil ein Gepäckträger befestigt ist. Alternativ kann aber auch das Profil bzw. der Draht des Lagerteils zusätzlich einen Gepäckträger formen.

Um eine Verdrehsicherung der Anlenkstellen an den Profilen zu erreichen wird vorgeschlagen, daß die die Profile aufnehmenden Querbohrungen der Anlenkstellen einen nicht runden Querschnitt aufweisen und die Profile zumindest an dieser Stelle einen entsprechenden nicht runden Querschnitt haben. Hierdurch kann auch ein starres Querteil zwischen den Anlenkstellen eingespart werden.

Ein Ausführungsbeispiel der Erfindung ist in der Zeichnung dargestellt und wird im folgenden näher beschrieben. Es zeigen

Fig. 1        eine perspektivische Ansicht der Felgenbremse,

Fig. 2        einen Schnitt nach A-B in Fig. 1.

Am Vorder- und/oder Hinterrad eines Fahrrades sind im oberen Bereich des Rades zu beiden Seiten je ein Profil 1a, 1b radial zum Rad und parallel zueinander an der Fahrradgabel bzw. an der Hinterradgabel oder am Fahrradrahmen befestigt. Die beiden Profile 1a, 1b bilden zusammen mit Verbindungsteilen ein Lagerteil 1, an dem die zweiarmigen Bremshebel 2, 3 angelenkt sind, die an ihren unteren Enden Bremsklötze 4, 5 tragen, die zu beiden Seiten des Rades an die Felge angedrückt werden. Die oberen Enden der Hebel 2, 3 sind mit Kraftübertragungsmitteln, insbesondere Zügen verbunden, die durch einen Handhebel am Fahrradlenker durch Zug betätigt werden, so daß ein Ziehen der oberen Enden nach oben ein Zusammendrücken der Bremsklötze 4, 5 erzeugt.

Die Hebel 2, 3 sind um Anlenkstellen 6, 7 drehbar gelagert, die von Schrauben 8, 9 gebildet werden, deren Köpfe 10, 11 Querbohrungen 12, 13 aufweisen, durch die die Profile 1a, 1b verlaufen.

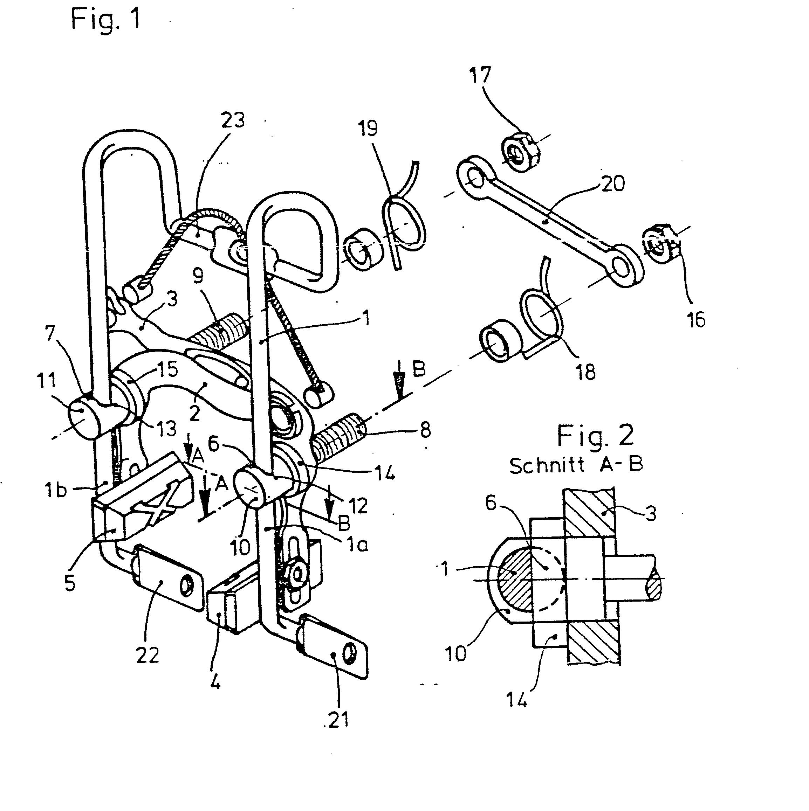

Auf den Schrauben sitzen zwischen den Hebeln 2, 3 und den Profilen 1a, 1b je eine axial zur Schraubenlängsachse bewegliche Andrückscheibe 14, 15, die durch Andrehen der jeweiligen auf der Schraube 8, 9 befindlichen Mutter 16, 17 gegen das Profil 1a, 1b gedrückt wird und damit die Schrauben 8, 9 bzw. Anlenkstellen 6, 7 unverrückbar auf den Profilen 1a, 1b festklemmen. Sind die Profile 1a, 1b im Bereich dieser Andrückscheiben 14, 15 in ihrem Querschnitt unrund, d.h. sie weisen Auflachungen auf (Fig. 2) so können an diesen Auflachungen die Andrückscheiben 14, 15 formschlüssig anliegen und die Anlenkstellen 6, 7 gegen Verdrehen sichern.

Auf den Schrauben 8, 9 befinden sich ferner Drehfedern 18, 19, die die Hebel 2, 3 in eine Drehrichtung beaufschlagen, daß die Bremsklötze 4, 5 nach außen voneinanderweg gedrückt werden. Beide Schrauben 8, 9 und damit beide Anlenkstellen 6, 7 sind durch ein waagerechtes Querteil 20 miteinander verbunden, das im Ausführungsbeispiel an beiden Enden Bohrungen aufweist, mit denen es auf den äußeren Enden der Schrauben 8, 9 aufliegt um dort von den Muttern gehalten zu werden. Das Querteil 20 nimmt durch die Bremshebel 2, 3 erzeugte nach außen gerichtete, auf die Anlenkstellen 6, 7 einwirkende Kräfte beim Bremsen auf. Auf dem Querteil kann um dieses verschwenkbar ein Walzendynamo befestigt sein, der auf der oberen Lauffläche des Rades aufliegt.

Werden die auf den äußeren Enden der Schrauben 8, 9 sitzenden Muttern gelöst, so können die Schrauben bzw. Anlenkstellen 6, 7 auf den Profilen 1a, 1b so weit verschoben werden, daß die Bremklötze 4, 5 genau in Höhe der Felge liegen. Danach werden die Muttern wieder festgezogen.

Die Profile 1a, 1b sind an ihren unteren Enden 21, 22 umgebogen und weisen dort Befestigungsstellen, insbesondere Bohrungen auf, mit denen sie an der vorderen oder hinteren Gabel oder am Fahrradrahmen befestigt sind. Im oberen Bereich sind beide Profile 1a, 1b entgegen der Fahrtrichtung nach hinten und darauf nach unten umgebogen und durch ein waagerechtes Profilstück 23 miteinander verbunden, wobei dieses Profilstück zur Befestigung am Kopf der Fahrradgabel oder an einem Teil des Fahrradrahmens durch eine Schraube dient. Die Profile 1a, 1b, das waagerechte Profilstück 23 und die unteren Enden 20, 21 können einstückig aus einem Profil, insbesondere Drahtprofil, z.B. aus Aluminium geformt sein.

An den Profilen 1a, 1b oder den unteren Enden der Profile kann ein Scheinwerfer befestigt sein und ferner kann das Lagerteil 1 zur Befestigung eines Gepäckträgers dienen. In einer nicht dargestellten alternativen Ausführungsform kann aber auch das Profil bzw. der Draht des Lagerteils zusätzlich einen Gepäckträger formen, der vom Lagerteil absteht.

# COHAUSZ & FLORACK

### PATENTANWALTSBÜRO
### SCHUMANNSTR. 97 D-4000 DÜSSELDORF 1
Telefon: (0211) 683346 · Telefax: (0211) 6790871 · Telex: 8586513 cop d

---

PATENTANWÄLTE:
Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

---

## Ansprüche

1. Felgenbremse mit einem Lagerteil an dem ein Paar zweiarmiger Hebel angelenkt ist, deren untere Enden Bremsklötze tragen und deren obere Enden mit Kraftübertragungsmitteln verbunden sind, die zu einem Handhebel führen,
d a d u r c h   g e k e n n z e i c h n e t , daß das Lagerteil (1) zwei jeweils zu einer Seite des Rades angeordnete Profile (1a, 1b) aufweist, daß an jedem der Profile (1a, 1b) einer der zweiarmigen Hebel (2, 3) angelenkt ist und daß die Anlenkstellen (6, 7) auf den Profilen schiebverstellbar sind.

2. Felgenbremse nach Anspruch 1,
d a d u r c h   g e k e n n z e i c h n e t , daß die Profile (1a, 1b) radial zum jeweiligen Rad verlaufen.

3. Felgenbremse nach Anspruch 1 oder 2,
d a d u r c h   g e k e n n z e i c h n e t , daß die Profile (1a, 1b) etwa parallel zu den seitlichen, das Rad haltenden Profilen der Fahrradgabel oder des Fahrradrahmens verlaufen.

4. Felgenbremse nach einem der vorherigen Ansprüche,
d a d u r c h   g e k e n n z e i c h n e t , daß die Anlenkstellen (6, 7) der zweiarmigen Hebel (2, 3) durch ein starres waagerechtes Querteil (20) miteinander verbunden sind.

5. Felgenbremse nach einem der vorherigen Ansprüche, d a d u r c h   g e k e n n z e i c h n e t , daß das Lagerteil (1) die Form eines umgedrehten U aufweist und mit den unteren Schenkelenden (21, 22) jeweils an den Gabelrohren oder Rahmenrohren befestigt ist.

6. Felgenbremse nach einem der vorherigen Ansprüche, d a d u r c h   g e k e n n z e i c h n e t , daß das Lagerteil (1) aus einem Profil, insbesondere einem Draht U-förmig gebogen ist.

7. Felgenbremse nach Anspruch 6, d a d u r c h   g e k e n n z e i c h n e t , daß das Profil bzw. der Draht beider Schenkel des Lagerteils (1) im oberen Bereich entgegen der Fahrtrichtung nach hinten und darauf nach unten umgebogen und durch ein waagerechtes Profilstück (23) verbunden ist um mit dem Profilstück an einem Verbindungsstück befestigt zu sein, das vom Kopf der Fahrradgabel oder des Fahrradrahmens gehalten ist.

8. Felgenbremse nach einem der Ansprüche 4 bis 7, d a d u r c h   g e k e n n z e i c h n e t , daß am Querteil (20) ein Walzendynamo um das Querteil verschwenkbar befestigt ist.

9. Felgenbremse nach einem der vorherigen Ansprüche, d a d u r c h   g e k e n n z e i c h n e t , daß an dem Lagerteil (1) ein Scheinwerfer befestigt ist.

10. Felgenbremse nach einem der vorherigen Ansprüche, d a d u r c h   g e k e n n z e i c h n e t , daß an dem Lagerteil (1) ein Gepäckträger befestigt ist.

11. Felgenbremse nach einem der Ansprüche 6 bis 9, d a d u r c h  g e k e n n z e i c h n e t , daß das Profil bzw. der Draht des Lagerteils (1) zusätzlich einen Gepäckträger formt.

12. Felgenbremse nach einem der vorherigen Ansprüche, d a d u r c h  g e k e n n z e i c h n e t , daß die die Profile (1a, 1b) aufnehmenden Querbohrungen (12, 13) der Anlenkstellen (6, 7) einen nicht runden Querschnitt aufweisen und die Profile (1a, 1b) zumindest an dieser Stelle einen entsprechenden nicht runden Querschnitt haben.

13. Felgenbremse nach Anspruch 12, d a d u r c h  g e k e n n z e i c h n e t , daß der nicht runde Querschnitt durch eine auf der Anlenkstelle (6, 7) gleitende Andrückscheibe (14, 15) erreicht wird.

Fig. 1

0243666

Fig. 2
Schnitt A-B

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 558 765 (HOGAN) * Spalte 2, Zeile 16 - Spalte 3, Zeile 56; Figuren 1,2 * | 1,2,3 | B 62 L 1/16 B 62 J 7/00 |
| Y | GB-A- 441 304 (WRIGHT) * Seite 1, Zeile 82 - Seite 2, Zeile 31 * | 1,9,10 | |
| Y | LE CYCLE, Band 18, Nr. 42, Dezember 1963 * Seite 13 * | 1,9,10 | |
| A | US-A-3 878 920 (FUGII) | 1 | |

RECHERCHIERTE SACHGEBIETE (Int. Cl.4)

B 62 L 1/00
B 62 J 7/00

Der vorliegende Recherchenbericht wurde für alle Patentansprüche erstellt.

| Recherchenort | Abschlußdatum der Recherche | Prüfer |
|---|---|---|
| DEN HAAG | 30-07-1987 | HARTEVELD C.D.H. |